# EUROPÄISCHE PATENTSCHRIFT

(11) **EP 0 670 339 B1**
(45) Veröffentlichungstag und Bekanntmachung des Hinweises auf die Patenterteilung: **13.05.1998**
(21) Anmeldenummer: 95102326.6
(22) Anmeldetag: 20.02.1995
(51) Int. Cl.: C08G 18/08, C08G 18/16, C08G 18/22

(54) **Verfahren zur Herstellung von thermoplastischen Polyurethanelastomeren (TPU)**
Process for the preparation of thermoplastic polyurethane elastomers (TPU)
Procédé de préparation d'élastomères de polyuréthanes thermoplastiques (TPU)

(30) Priorität: 03.03.1994 DE 4406948
(43) Veröffentlichungstag der Anmeldung: 06.09.1995
(73) Patentinhaber: BAYER AG, 51368 Leverkusen (DE)
(72) Erfinder: Bräuer, Wolfgang, Dr., D-51375 Leverkusen (DE); Müller, Friedemann, Dr., D-41470 Neuss (DE); Heidingsfield, Herbert, Dipl. Ing., D-50226 Frechen (DE); Schulte, Bernhard, Dr., D-47803 Krefeld (DE); Winkler, Jürgen, Dipl. Ing., D-40764 Langenfeld (DE)

(56) Entgegenhaltungen:
- EP-A- 0 571 831
- US-A- 4 169 196

## Beschreibung

Thermoplastische Polyurethanelastomere (TPU) und ihre Herstellung sind bekannt. Die Eigenschaften von TPU können durch geeignete Wahl der Ausgangsstoffe und der Reaktionsbedingungen in weiten Grenzen variiert und damit verschiedenartigen Anwendungszwecken angepaßt werden (vgl. Kunststoffe 68 (1978) Seiten 819 bis 825 und Kautschuk, Gummi, Kunststoffe 35 (1982) Seiten 568 bis 584).

Thermoplastische Polyurethanelastomere werden aus linearen Polyolen, meist Polyester oder Polyether, organischen Isocyanaten und kurzkettigen Diolen (Kettenverlängerern) hergestellt. Zusätzlich können Katalysatoren zur Beschleunigung der Reaktion zugesetzt werden. Deren Menge kann entsprechend der Reaktivität der Ausgangsstoffe und der Wahl der Reaktionsbedingungen 5 bis 1000 ppm, bezogen auf das Polyol sein (DE-A 3 224 324; US-PS 5 200 491).

Die thermoplastischen Polyurethanelastomere können entweder stufenweise (Prepolymerverfahren) oder in einer Stufe durch gleichzeitige Reaktion aller Ausgangsstoffe (one shot-Verfahren) hergestellt werden. Beim Prepolymerverfahren wird zuerst aus dem Polyol und dem Diisocyanat ein Isocyanatgruppenenthaltendes Prepolymer gebildet, das dann in einer weiteren Stufe mit dem Kettenverlängerer umgesetzt wird.

Technisch bevorzugt man kontinuierlich arbeitende Verfahren. Die bekanntesten sind das sogenannte Bandverfahren und das Extruderverfahren. EP-A 571 831 offenbart einen mehrstufigen Prepolymers/Band-Prozeß.

Man unterscheidet zwei Hauptgruppen von thermoplastischen Polyurethanelastomeren: Solche für die Verarbeitung durch Spritzgießen und solche für die Verarbeitung durch Extrusion.

Die für das Spritzgießen geeigneten TPU-Typen werden bei ihrer Verarbeitung großen Scherkräften ausgesetzt, die neben der Erhöhung der Temperatur auch für das Schmelzen der Produkte vor der Verarbeitung sorgen. Diese TPU's müssen natürlich die bei der Verarbeitung auftretende Belastung ohne Einbuße an Eigenschaften überstehen. Gleichzeitig müssen sie sich nach der Formgebung sehr schnell wieder verfestigen, damit kurze Zykluszeiten im Spritzguß möglich sind.

Die für Extruderverarbeitung geeigneten TPU's besitzen ein völlig anderes Eigenschaftsprofil, sie müssen bei Einwirkung wesentlich kleinerer Scherkräfte vollständig homogene Schmelzen bilden. Nur in diesem Fall werden Formkörper mit einwandfrei homogener Oberfläche erhalten. Dies ist insbesondere bei der Herstellung von Folien durch Aufblasen eines extrudierten Schlauches entscheidend. Da thermoplastische Polyurethanelastomere breite Aufschmelzbereiche, hohe Schmelzviskositäten und begrenzte Fließfähigkeit der Polyurethanschmelze besitzen, kommt es insbesondere bei TPU's für die Extruderverarbeitung auf völlige Konstanz der Schmelzviskosität und der Morphologie an.

Bis heute ist es nicht gelungen, die kontinuierliche Herstellung von thermoplastischen Polyurethanelastomeren in Schneckenextrudern so genau zu steuern, daß Produkte in zur Extrusionsverarbeitung geeigneter Qualität gleichförmig und reproduzierbar erhalten werden.

Der Erfindung liegt die Erkenntnis zugrunde, daß die bei der Herstellung von TPU verwendeten Katalysatoren nicht nur die Reaktion beschleunigen, sondern auch Einfluß auf die morphologische Beschaffenheit, z.B. die Kristallinität der TPU's haben. Bei sonst gleichen Bedingungen und Ausgangsstoffen nimmt die Kristallinität mit zunehmender Katalysatormenge ab. Man kann das Kristallisationsverhalten durch die Rekristallisationstemperatur des thermoplastisch verarbeitbaren Polyurethanelastomeren, gemessen in °C, bei einer Abkühlung der Produktschmelze mit 40°C pro Minute in einem Differential Scanning Calorimeter (DSC) beschreiben. Die Erkenntnis, daß die Rekristallisationstemperatur von der Katalysatormenge abhängt, läßt sich zur Steuerung des kontinuierlichen Herstellungsverfahrens verwenden.

Gegenstand der Erfindung ist somit ein Verfahren zur Konstanthaltung der Eigenschaften, insbesondere der Rekristallisationstemperatur von thermoplastischen Polyurethanelastomeren, insbesondere von solchen für die Verarbeitung durch Extrusion, während der kontinuierlichen Herstellung in Schneckenextrudern durch kontinuierliches Zuführen von linearen Hydroxyl-terminierten Polyolen mit einem Molekulargewicht von 500 bis 5000, organischen Diisocyanaten und Diol- und gegebenenfalls Triolkettenverlängerungsmitteln mit einem Molekulargewicht von 62 bis 500 bei einem Molverhältnis von Polyol:Kettenverlängerern von 1:1 bis 1:5 sowie kontinuierlicher Zugabe eines Katalysators, das dadurch gekennzeichnet ist, daß man einen Sollwert für die Rekristallisationstemperatur vorgibt, der mindestens 2°C unter dem Wert für das entsprechende katalysatorfrei hergestellte TPU liegt, bei Überschreiten dieses Sollwerts für die Rekristallisationstemperatur, die kontinuierlich zugeführte Katalysatormenge erhöht und entsprechend bei Unterschreiten dieses Wertes vermindert in einem solchen Maße, daß der Sollwert eingehalten wird.

Man muß also zur Anwendung dieses Steuerungsverfahrens zunächst mit den vorgesehenen Ausgangsprodukten und bei den vorgesehenen Reaktionsbedingungen ohne Benutzung eines Katalysators ein thermoplastisches Polyurethanelastomer herstellen und dessen Rekristallisationstemperatur bestimmen. Diese Rekristallisationstemperatur ist die unter den vorgegebenen Bedingungen maximal mögliche. Man wählt dann je nach beabsichtigtem Anwendungszweck einen Sollwert für die Rekristallisationstemperatur, der mindestens 2°C unter diesem Maximalwert liegt und höchstens 40°C. Stellt man jetzt unter den gleichen Bedingungen ein TPU mit Katalysatorzugabe her, dann erhält man ein Material mit einer Rekristallisationstemperatur unter dem Maximalwert, den man dann durch Erhöhen oder Verringern der kontinuierlich zugegebenen Katalysatormenge auf den Sollwert einstellen kann. Ist der Sollwert erreicht, dann kann er durch sehr kleine Erhöhung oder Verminderung der Katalysatormenge aufrecht erhalten werden.

Zur Herstellung von thermoplastischen Polyurethanelastomeren bevorzugte Polyole sind Polyester, Polyether, Polycarbonate oder ein Gemisch aus diesen.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans.

Es können auch trifunktionelle Polyether in Anteilen von 0 bis 30 Gew.-%, bezogen auf die bifunktionellen Polyether eingesetzt werden.

Die linearen Polyetherole besitzen vorzugsweise Molekulargewichte von 500 bis 5000. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol- 1,3, Propandiol-1,3 und Dipropylenglykol. Je nach den gewünschten Eigenschaften können die mehrwertigen Alkohole allein oder gegebenenfalls in Mischung untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ώ-Hydroxycarbonsäuren, beispielsweise ώ-Hydroxycapronsäure und vorzugsweise Polymerisationsprodukte von Lactonen, beispielsweise gegebenenfalls substituierten ώ-Caprolactonen.

Als Polyesterole vorzugsweise verwendet werden Ethandiol-polyadipate, 1,4-Butandiol-polyadipate, Ethandiol-butandiol-1,4-polyadipate, 1,6-Hexandiol-neopentylglykol-polyadipate, 1,6-Hexandiol-1,4-butandiol-polyadipate und Polycaprolactone.

Die Polyesterole besitzen Molekulargewichte von 500 bis 5000.

Als organische Diisocyanate kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden.

Im einzelnen seien beispielhaft genannt: aliphatische Diisocyanate, wie Hexamethylendiisocyanat, cycloaliphatische Diisocyanate, wie Isophorondiisocyanat, 1,4-Cyclo-hexandiisocyanat, 1-Methyl-2,4- und -2,6-cyclohexandiisocyanat sowie die entsprechenden Isomerengemische, 4,4'-, 2,4'- und 2,2'-Dicyclohexylmethandiisocyanat sowie die entsprechenden Isomerengemische und aromatische Diisocyanate, wie 2,4-Toluylendiisocyanat, Gemische aus 2,4- und 2,6-Toluylendiisocyanat, 4,4'-, 2,4'- und 2,2'-Diphenylmethandiisocyanat, Gemische aus 2,4'- und 4,4'-Diphenylmethandiisocyanat, urethanmodifizierte flüssige 4,4'- und/oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von größer als 96 Gew.-% und insbesondere 4,4'-Diphenylmethandiisocyanat und 1,5-Naphthylendiisocyanat.

Die genannten Diisocyanate können zusammen mit bis zu 15 % (berechnet auf Diisocyanat), aber höchstens soviel eines Polyisocyanates, daß ein unvernetztes Produkt entsteht, verwendet werden. Beispiele sind Triphenylmethan-4,4',4"-triisocyanat und Polyphenyl-polymethylen-polyisocyanate.

Als Kettenverlängerungsmittel mit den Molekulargewichten von 62 bis 500 kommen vorzugsweise aliphatische Diole mit 2 bis 14 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di(β-hydroxyethyl)-hydrochinon, (cyclo)aliphatische Diamine, wie z.B. Isophoron-diamin, Ethylendiamin, 1,2-, 1,3-Propylen-diamin, N-Methyl-propylendiamin-1,3, N,N'-Dimethyl-ethylen-diamin und aromatische Diamine, wie z.B. 2,4- und 2,6-Toluylen-diamin, 3,5-Diethyl-2,4- und/oder -2,6-toluylen-diamin und primäre ortho-di-, tri- und/oder tetraalkylsubstituierte 4,4'-Diaminodiphenylmethane. Es können auch Gemische der oben genannten Kettenverlängerer eingesetzt werden.

Zur Herstellung der TPU können die Ausgangsstoffe, gegebenenfalls in Gegenwart von Katalysatoren, Hilfsmitteln und/oder Zusatzstoffen in solchen Mengen zur Reaktion gebracht werden, daß das Äquivalenzverhältnis von NCO-Gruppen zur Summe der NCO-reaktiven Gruppen, insbesondere der OH-Gruppen der niedermolekularen Diole/Triole und Polyole 0,9:1,0 bis 1,2:1,0, vorzugsweise 0,95:1,0 bis 1,10:1,0 beträgt.

Geeignete Katalysatoren sind die für diesen Zweck bekannten und üblichen tertiären Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und/oder Zinnverbindungen.

Neben Katalysatoren können den Ausgangsstoffen auch Hilfsmittel und/oder Zusatzstoffe einverleibt werden. Genannt seien beispielsweise Gleitmittel, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel.

Verstärkungsmittel sind insbesondere faserartige Verstärkungsstoffe wie z.B. anorganische Fasern, die nach dem Stand der Technik hergestellt werden und auch mit einer Schlichte beaufschlagt sein können.

Nähere Angaben über die oben genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-A 2 901 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Ebenfalls können andere Elastomere wie Kautschuk, Ethylen/Vinylacetatcopolymere, Styrol/Butadiencopolymere sowie andere TPU's verwendet werden. Weiterhin zur Einarbeitung geeignet sind handelsübliche Weichmacher wie Phosphate, Phthalate, Adipate, Sebacate.

Erfindungsgemäß werden TPU's kontinuierlich nach einem Extruderverfahren hergestellt, gegebenenfalls in Verbindung mit einem Prepolymerreaktor.

Man stellt zunächst bei vorgegebener Rezeptur aus den oben genannten Bestandteilen Polyol, Isocyanat und Kettenverlängerer, aber ohne Katalysator, ein TPU her und bestimmt dessen Rekristallisationstemperatur (in °C bei Abkühlung der Schmelze um 40°C pro Minute in einem Differential Scanning Calorimeter).

Man wiederholt die Reaktion mit steigenden abgestuften Mengen Katalysator, bevorzugt zwischen 1 und 1000 ppm, bezogen auf die Polyoldosierung.

Mit den so erhaltenen TPU-Proben werden differential scanning calorimeter (DSC)-Messungen durchgeführt. Dabei ist die Rekristallisationstemperatur T_{C} ein Maß für die Kristallinität und damit auch für die Kristallitgröße des TPU's (C.S. Schollenberger, Abstr. Pap. Am. Chem. Soc. 1979, 83; J. Foks u.a., Eur. Pol. J. 25, 31).

Die DSC-Messung erfolgt folgendermaßen: das Produkt wird im Stickstoff-Medium von -70°C bis 260°C mit 20°C/min aufgeheizt, danach mit 40°C/min auf -70°C abgekühlt; in der Aufheizphase stellen die breiten endothermen Peaks oberhalb 100°C die Schmelzbereiche der kristallinen TPU-Teile, in der Abkühlphase der scharfe exotherme Peak die Kristallisation dar.

Mit steigender Menge Katalysator fällt die Rekristallisationstemperatur und damit die Kristallinität des TPU's. Das Aufschmelzen dieser Produkte mit herabgesetzter Kristallinität wird so in der formgebenden Verarbeitung erleichtert.

Fällt die Rekristallisationstemperatur mindestens um 2°C im Vergleich zur unkatalysierten Fahrweise nehmen die Inhomogenitäten, z.B. in einer Blasfolienherstellung, durch nicht aufgeschmolzene Kristallite deutlich ab, bzw. verschwinden ganz.

Erhöht man die Katalysatormenge aber noch weiter, wird die Standfestigkeit und die Homogenität der aus dem TPU hergestellten Folie wieder schlechter. Mit diesen Vorversuchen wird die Rekristallisationstemperatur als Sollwert festgelegt, bei der die Folienverarbeitung optimal ist.

Dieser Sollwert der Rekristallisationstemperatur hängt von der TPU-Rezeptur ab und muß für jedes Produkt einzeln festgelegt werden. Er liegt aber mindestens 2°C unter dem Wert für das entsprechende katalysatorfrei hergestellte TPU.

Beim erfindungsgemäßen Herstell-Verfahren wird also zunächst in einer Dosierreihe die Rekristallisationstemperatur bis auf den Sollwert abgesenkt, bei dem eine optimale Extrusionsverarbeitung gewährleistet ist. Über eine stichprobenartige Kontrolle wird diese Temperatur überwacht. Sie sollte nicht mehr als 2°C vom Sollwert abweichen.

Beim Überschreiten dieser Grenze nach oben, z.B. infolge einer schwankenden Polyesteraktivität, wird nach der zuvor in den Vorversuchen ermittelten Dosierabhängigkeit die Katalysatormenge entsprechend erhöht bzw. beim Unterschreiten der Rekristallisationstemperatur erniedrigt.

Der Katalysator kann direkt zu den Rohstoffen, Polyol und/oder Kettenverlängerer, oder auch getrennt dosiert werden.

Die erfindungsgemäß hergestellten TPU's haben einen Härtebereich von 75 Shore A bis 70 Shore D. Bevorzugt werden TPU's mit einer Härte von 75 bis 95 Shore A, wo sich der Katalysatoreinfluß auf die Morphologie besonders bemerkbar macht.

Die so erhaltenen Produkte besitzen sehr gute mechanische Eigenschaften und eignen sich insbesondere zur Herstellung von Polyurethanfolien, Kalander- und Powder-slush-artikeln.

### Beispiele

### Beispiel 1

100 Gew.-Teile eines Poly-butandiol-1,4-adipates mit einem Molgewicht von ca. 2250, 2,4 Gew.-Teile Hexandiol und 0,7 Gew.-Teile eines 2,2'-6,6'-Tetraisopropyldiphenylcarbodiimides werden in einem Wärmetauscher auf 200°C gebracht und kontinuierlich mittels einer Zahnradpumpe in einen Rohrreaktor dosiert. Gleichzeitig werden dort 48 Gew.-Teile an 60°C heißem Diphenylmethandiisocyanat (MDI-flüssig) durch eine Düse eingespeist. Nach vollständigem Umsatz wird das Reaktionsgemisch kontinuierlich in das erste Gehäuse eines Zweiwellenkneters (ZSK 83; Fa. Werner/Pfleiderer) dosiert. In das gleiche Gehäuse werden 0,2 Gew.-Teile Bis-ethylen-stearylamid als Pulver und 11,0 Gew.-Teile auf 60°C erhitztes flüssiges Butandiol dosiert. Die Gesamtdosierung beträgt etwa 660 kg/h.

Die Gehäusetemperaturen liegen bei 75°C bis 260°C. Die Drehzahl der ZSK ist auf 300 U/min eingestellt. Das TPU wird als Schmelzstrang extrudiert, im Wasser abgekühlt und granuliert.

### Beispiele 2 bis 4

Die Beispiele werden analog Beispiel 1 durchgeführt. Zusätzlich werden in die Polyestermischung jeweils 10, 15 bzw. 20 ppm Titanylacetylacetonat, bezogen auf 100 Gew.-Teile Poly-butandiol-1,4-adipat zugegeben.

### Beispiele 5 bis 9

100 Gew.-Teile eines Poly-butandiol-1,4-adipates mit einem Molgewicht von ca. 2250 und 0,7 Gew.-Teile eines 2,2'-6,6'-Tetraisopropyldiphenylcarbodiimides werden in einem Wärmetauscher auf 140°C gebracht und kontinuierlich mittels einer Zahnradpumpe in einen Rohrreaktor dosiert. Gleichzeitig werden dort 40 Gew.-Teile an 60°C heißem Diphenylmethandiisocyanat (MDI-flüssig) durch eine Düse eingespeist. Der Rohrreaktor wird mit einem Stachelrührer mit ca. 1500 U/min gerührt.

Nach vollständigem Umsatz wird das Reaktionsgemisch kontinuierlich in das erste Gehäuse eines Zweiwellenkneters (ZSK 53; Fa. Werner/Pfleiderer) dosiert. In das gleiche Gehäuse werden 10,5 Gew.-Teile auf 60°C erhitztes flüssiges Butandiol dosiert. In Gehäuse 8 gibt man 0,6 Gew.-Teile Bis-ethylen-stearylamid als Pulver. Die Gesamtdosierung beträgt etwa 90 kg/h.

Die Gehäusetemperaturen liegen bei 170°C bis 200°C. Die Drehzahl der ZSK ist auf 300 U/min eingestellt. Das TPU wird als Schmelzstrang extrudiert, im Wasser abgekühlt und granuliert.

In den Beispielen 6 bis 9 werden in die Polyestermischung jeweils 1,5, 5, 10 bzw. 15 ppm Titanylacetylacetonat, bezogen auf 100 Gew.-Teile Poly-butandiol-1,4-adipat zugegeben.

### Beispiele 10 bis 12

100 Gew.-Teile eines Poly-butandiol-1,4-adipates mit einem Molgewicht von ca. 1000 werden auf 140°C erhitzt und mit 14 Gew.-Teilen Butandiol und 65 Gew.-Teilen Diphenylmethandiisocyanat unter Rühren in einem Topf umgesetzt. Nach 30 Sekunden gießt man die Reaktionsmischung auf ein beschichtetes Blech und tempert 30 Minuten bei 120°C nach.

In den Beispielen 11 und 12 werden jeweils zusätzlich 10 bzw. 15 ppm Titanylacetylacetonat, bezogen auf 100 Gew.-Teile Poly-butandiol-1,4-adipat vorgelegt.

Die Ergebnisse der physikalischen Prüfungen (die DSC-Messungen wurden mit einem DSC-7 der Firma Perkin Elmer durchgeführt) und der Folienverarbeitung sind in der Tabelle aufgeführt.

Man erhält nach dem erfindungsgemäßen Verfahren bei den drei verschiedenen TPU-Rezepturen mit einer Katalysatormenge von 15 ppm (Beispiel 3), 10 ppm (Beispiel 8), und 15 ppm (Beispiel 11) ein gut aufschmelzendes TPU, welches bei der Folienverarbeitung zu einer standfesten Folie mit hoher Homogenität verarbeitet werden kann. Abweichungen der Katalysatormenge nach unten oder nach oben führen sofort zu einer verschlechterten Folienqualität.

Die während der kontinuierlichen Herstellung auftretenden Abweichungen der Rekristallisationstemperaturen vom Sollwert wurden über die Änderung der Katalysatordosierung rückgängig gemacht.

### Beispiel 13

Ein gemäß Beispiel 3 hergestelltes TPU zeigte nach einer Laufzeit der kontinuierlichen Herstellung von 4 Stunden eine Rekristallisationstemperatur von 30°C (Abweichung vom Sollwert = 3°C). Die Katalysatormenge wurde von 15 auf 12 ppm abgesenkt und es resultierte eine Rekristallisationstemperatur von 34°C (= Sollwert).

Der Folienblasversuch dieser nach 8 Stunden beendeten Partie ergab gute Verarbeitungseigenschaften:
- Standfestigkeit:: gut
- Homogenität:: sehr gut
- MVR - 200°C:: 37

| Bsp. | Kat.menge (ppm) | DSC T_{c} (°C) | MVR-200°C cm³/10min | Folienblasversuch Standfestigkeit | Homogenität |
|---|---|---|---|---|---|
| 1 | 0 | 56 | 20 | gut | mittel |
| 2 | 10 | 43 | 30 | gut | mittel |
| 3 | 15 | 33 | 36 | gut | sehr gut |
| 4 | 20 | 25 | 52 | mittel | mittel |
| 5 | 0 | 70 | 39 | mittel | schlecht |
| 6 | 1,5 | 68 | 27 | mittel | mittel |
| 7 | 5 | 61 | 21 | mittel | mittel |
| 8 | 10 | 55 | 22 | gut | gut |
| 9 | 15 | 50 | 28 | mittel | mittel |
| 10 | 0 | 80 | 19 | gut | mittel |
| 11 | 10 | 67 | 28 | gut | gut |
| 12 | 15 | 63 | 35 | mittel | mittel |
| T_{C} = Kristallisationstemperatur | | | | | |

## Patentansprüche

1. Verfahren zur Konstanthaltung der Eigenschaften von thermoplastischen Polyurethanelastomeren, während der kontinuierlichen Herstellung in Schneckenextrudern durch kontinuierliches Zuführen von linearen Hydroxyl-terminierten Polyolen mit einem Molekulargewicht von 500 bis 5000, organischen Diisocyanaten und Diol- und gegebenenfalls Triolkettenverlängerungsmitteln mit einem Molekulargewicht von 62 bis 500 bei einem Molverhältnis von Polyol:Kettenverlängerem von 1:1 bis 1:5 sowie kontinuierlicher Zugabe eines Katalysators, dadurch gekennzeichnet, daß man einen Sollwert für die Rekristallisationstemperatur vorgibt, der mindestens 2°C unter dem Wert für das entsprechende katalysatorfrei hergestellte TPU liegt, bei Überschreiten dieses Sollwerts für die Rekristallisationstemperatur die kontinuierlich zugeführte Katalysatormenge erhöht und entsprechend bei Unterschreiten dieses Wertes vermindert in einem solchen Maße, daß der Sollwert eingehalten wird.

2. Verfahren zur Konstanthaltung der Eigenschaften von thermoplastisch verarbeitbaren Polyurethanelastomeren gemäß Anspruch 1), dadurch gekennzeichnet, daß die Katalysatoren organische Metallverbindungen wie Titansäureester, Eisen- und/oder Zinnverbindungen sind.

3. Verfahren zur Konstanthaltung der Eigenschaften von thermoplastisch verarbeitbaren Polyurethanelastomeren gemäß Anspruch 1), dadurch gekennzeichnet, daß die so hergestellten Produkte im Härtebereich von 75 bis 95 Shore-A liegen.

## Claims

1. A method whereby the properties of thermoplastic polyurethane elastomers are kept constant during continuous manufacture in screw-type extruding machines by continuously adding straight-chain hydroxyl-terminated polyols having a molecular weight of 500 to 5000, organic diisocyanates and diol and optionally triol chain-lengthening agents having a molecular weight of 62 to 500, the molar ratio of polyols to chain-lengthening agents being 1 : 1 to 1 : 5, and by continuous addition of a catalyst, characterised in that the recrystallisation temperature is set at a value at least 2°C below the value for the corresponding TPU manufactured without a catalyst, and when the set recrystallisation temperature is exceeded, the amount of continuously supplied catalyst is increased, whereas when the value falls below, the amount is decreased so as to maintain the set value.

2. A method whereby the properties of polyurethane elastomers suitable for thermoplastic processing are kept constant as per claim 1, characterised in that the catalysts are organic metal compounds such as titanic acid esters, iron and/or tin compounds.

3. A method whereby the properties of polyurethane elastomers suitable for thermoplastic processing are kept constant as per claim 1, characterised in that the substances produced have a hardness in the range from 75 to 95 Shore A.

## Revendications

1. Procédé pour maintenir à un niveau constant les propriétés des élastomères de polyuréthannes thermoplastiques au cours de la fabrication continue dans des extrudeuses à vis par introduction continue de polyols linéaires à groupes terminaux hydroxy, de poids moléculaire 500 à 5000, de diisocyanates organiques et d'agents d'allongement des chaînes consistant en diols et le cas échéant triols, de poids moléculaire 62 à 500, à un rapport molaire polyols/agents d'allongement des chaînes de 1:1 à 1:5 et introduction continue d'un catalyseur, caractérisé en ce que l'on détermine au préalable une valeur impérative pour la température de recristallisation, laquelle se situe à au moins 2°C au-dessous de la valeur observée avec l'élastomère de polyuréthanne thermoplastique correspondant préparé sans catalyseur, on accroît la quantité de catalyseur introduite en continu lorsqu'on dépasse cette valeur impérative de la température de recristallisation et on la diminue en correspondance lorsqu'on passe au-dessous de cette valeur, en sorte que la valeur impérative soit maintenue.

2. Procédé pour maintenir à un niveau constant les propriétés des élastomères de polyuréthannes aptes au travail thermoplastique selon la revendication 1, caractérisé en ce que les catalyseurs sont des dérivés organiques de métaux tels que des esters titaniques, des dérivés du fer et/ou de l'étain.

3. Procédé pour maintenir à un niveau constant les propriétés des élastomères de polyuréthannes aptes au travail thermoplastique selon la revendication 1, caractérisé en ce que les produits préparés dans ces conditions ont une dureté qui se situe dans l'intervalle de 75 à 95 Shore A.
